# EUROPEAN PATENT APPLICATION

(11) **EP 4 089 808 A1**
(43) Date of publication of application: **16.11.2022**
(21) Application number: 21186846.8
(22) Date of filing: 21.07.2021
(51) Int. Cl.: H01M 50/15, H01M 50/533, H01M 50/536, H01M 50/538, H01M 50/55, H01M 50/553

(54) **BATTERY, BATTERY MODULE, BATTERY PACK AND BATTERY MANUFACTURING METHOD**

(30) Priority: 14.05.2021 CN 202110527859
(71) Applicant: CALB Co., Ltd., Changzhou City, Jiangsu Province (CN)
(72) Inventor: XU, Jiuling, Changzhou City, Jiangsu Province (CN); PAN, Fangfang, Changzhou City, Jiangsu Province (CN); QI, Binwei, Luoyang City, Henan Province (CN); ZHANG, Yongjie, Luoyang City, Henan Province (CN)
(74) Representative: Becker, Eberhard

(57) **Abstract**

The disclosure provides a battery, a battery module, a battery pack, and a battery manufacturing method. The battery includes a housing (10), a cell (20), and a pole column subassembly (30). The housing (10) includes two first surfaces (11) opposite to each other in a first direction. The cell (20) is arranged in the housing (10). The cell (20) includes a cell body (21) and a tab portion (22). The tab portion (22) includes two or more single-piece tabs (221) extending from the lateral side of the cell body (21). When the single-piece tabs (221) are flattened along the direction perpendicular to the lateral side of the cell body (21), the overlapping direction of the single-piece tabs (221) is the first direction. The pole column subassembly (30) is arranged on a first surface (11) and connected with the tab portion (22). The orthographic projections of the tab portion (22) and the pole column subassembly (30) along the first direction are at least partially overlapped on a first surface (11).

## Description

### BACKGROUND

### Field of the Disclosure

The disclosure relates to the technical field of batteries, in particular to a battery, a battery module, a battery pack and a battery manufacturing method.

### Description of Related Art

In the related art, the tab portion of the battery is connected with the pole column subassembly of the cover plate, and the tab portion needs to be bent during welding. Due to the limitation of the configuration position of the cover plate, it is difficult to connect the bent tab portion with the pole column subassembly.

### SUMMARY OF THE DISCLOSURE

The invention provides a battery, a battery module, a battery pack and a battery manufacturing method.

According to the first aspect of the invention, a battery is provided, which includes:
A housing includes two first surfaces opposite to each other in a first direction.

A cell is arranged in the housing. The cell includes a cell body and a tab portion. The tab portion includes two or more single-piece tabs extending from the lateral side of the cell body. When the single-piece tabs are flattened along the direction perpendicular to the lateral side of the cell body, the overlapping direction of the single-piece tabs is the first direction.

A pole column subassembly is arranged on a first surface and connected with the tab portion.

The orthographic projections of the tab portion and the pole column subassembly along the first direction are at least partially overlapped on a first surface.

According to the second aspect of the invention, a battery manufacturing method is provided, which includes:
A housing is provided, which includes two first surfaces opposite to each other in a first direction, and the first surface is provided with a pole column subassembly thereon.

A cell is provided, which is arranged in the housing. The cell includes a cell body and a tab portion. The tab portion includes two or more single-piece tabs extending from the lateral side of the cell body. When the single-piece tabs are flattened along the direction perpendicular to the lateral side of the cell body, the overlapping direction of the single-piece tabs is the first
The tab portion is connected to the pole column subassembly.

The orthographic projections of the tab portion and the pole column subassembly along the first direction are at least partially overlapped on a first surface.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
Fig. 1A is a schematic flowchart of a battery manufacturing method according to a first exemplary embodiment.
Fig. 1B is a schematic flowchart of a battery manufacturing method according to a second exemplary embodiment.
Fig. 1C is a schematic flowchart of a battery manufacturing method according to a third exemplary embodiment.
Fig. 2 is a schematic view showing the structure of a tab portion that is formed through a battery manufacturing method according to the first exemplary embodiment.
Fig. 3 is a structural schematic view showing a tab portion and an electrode connecting piece that are welded through a battery manufacturing method according to the first exemplary embodiment.
Fig. 4 is a schematic view showing a structure of a bent tab portion in a battery manufacturing method according to the first exemplary embodiment.
Fig. 5 is a structural schematic view of single-piece tabs that are gathered through a battery manufacturing method according to the second exemplary embodiment.
Fig. 6 is a schematic view showing the structure of a tab portion that is formed through a battery manufacturing method according to the second exemplary embodiment.
Fig. 7 is a structural schematic view showing a tab portion and an electrode connecting piece that are welded through a battery manufacturing method according to the second exemplary embodiment.
Fig. 8 is a schematic view showing a structure of a bent tab portion in a battery manufacturing method according to the second exemplary embodiment.
Fig. 9 is a structural schematic view of single-piece tabs that are gathered and connected to the electrode connecting piece through a battery manufacturing method according to the third exemplary embodiment.
Fig. 10 is a schematic view showing the structure of a tab portion that is formed through a battery manufacturing method according to the third exemplary embodiment.
Fig. 11 is a structural schematic view showing a tab portion and an electrode connecting piece that are welded through a battery manufacturing method according to the third exemplary embodiment.
Fig. 12 is a schematic view showing a structure of a bent tab portion in a battery manufacturing method according to the third exemplary embodiment.
Fig. 13 is a schematic view showing a partial structure of single-piece tabs that are gathered and connected to the electrode connecting piece through a battery manufacturing method according to the third exemplary embodiment.
Fig. 14 is a schematic view showing a partial structure of a bent tab portion in a battery manufacturing method according to the third exemplary embodiment.
Fig. 15 is a schematic view showing a partial structure of a battery according to the third exemplary embodiment.

### DESCRIPTION OF EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

Throughout the disclosure, the term "cell" refers to a minimum unit which includes an electrode assembly and an electrolyte and is capable of electrochemical reaction, such as charge/discharge. The term "battery" refers to a unit which includes at least one cell. The term "battery module" refers to a unit which includes at least two batteries. The term "battery pack" refers to a unit which includes at least two batteries or at least one battery module.

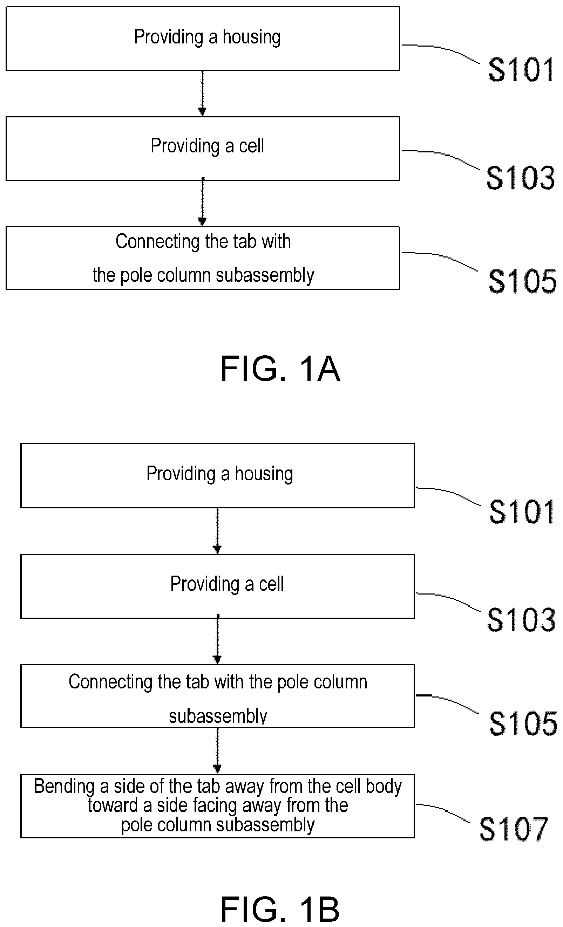

An embodiment of the invention provides a battery manufacturing method. Please refer to FIG. 1A. The battery manufacturing method includes:

Step S101: A housing 10 is provided, which includes two first surfaces 11 opposite to each other in a first direction, and the first surface 11 is provided with a pole column subassembly 30 thereon.

Step S103: A cell 20 is provided, which is arranged in the housing 10. The cell 20 includes a cell body 21 and a tab portion 22. The tab portion 22 includes two or more single-piece tabs 221 extending from the lateral side of the cell body 21. When the single-piece tabs 221 are flattened along the direction perpendicular to the lateral side of the cell body 21, the overlapping direction of the single-piece tabs 221 is the first direction.

Step S105: The tab portion 22 is connected to the pole column subassembly 30.

The orthographic projections of the tab portion 22 and the pole column subassembly 30 along the first direction are at least partially overlapped on the first surface 11.

The battery manufacturing method in an embodiment of the invention makes a plurality of single-piece tabs 221 form a tab portion 22 after being gathered, and the tab portion 22 is welded with the pole column subassembly 30 arranged on the housing 10, thereby quickly completing the welding of the tab portion 22 and the pole column subassembly 30. Moreover, the orthographic projections of the tab portion 22 and the pole column subassembly 30 along the first direction are at least partially overlapped on the first surface 11, that is, the tab portion 22 is directly opposite to the pole column subassembly 30, so as to facilitate the welding of the pole column subassembly 30 and the tab portion 22, and the structure stability after welding is better.

The two or more single-piece tabs 221 extending from the lateral side of the cell body 21 are gathered together to form the tab portion 22. When the single-piece tabs 221 are flattened in a direction perpendicular to the lateral side of the cell body 21, the large surface of the single-piece tabs 221 is slightly parallel to the surface of the housing 10 on which the pole column subassembly 30 is provided. That is, the large surface of the tab portion 22 is directly opposite to the pole column subassembly 30, thereby facilitating the welding of the pole column subassembly 30 and the tab portion 22, and the structural stability after welding is better.

It should be noted that the cell body 21 includes two or more electrode pieces, and the tab portion 22 includes two or more single-piece tabs 221. The single-piece tabs 221 respectively extend from the corresponding electrode pieces. The width of the single-piece tabs 221 is smaller than the width of the electrode piece, and a plurality of single-piece tabs 221 are stacked to form a tab portion 22 and welded to the pole column subassembly 30. Therefore, before a plurality of single-piece tabs 221 are stacked, the large surface of the single-piece tabs 221 is slightly parallel to the surface of the housing 10 where the pole column subassembly 30 is provided. The slightly parallelism mentioned here is set in consideration of specific process errors and the like. If various errors are ignored, the large surface of the single-piece tabs 221 can be parallel to the surface of the housing 10 where the pole column subassembly 30 is provided. Optionally, when the single-piece tabs 221 are flattened in a direction perpendicular to the lateral side of the cell body 21, the included angle between the large surface of the single-piece tabs 221 and the surface of the housing 10 where the pole column subassembly 30 is provided is 0 degrees to 10 degrees. Further, the included angle between the large surface of the single-piece tabs 221 and the surface of the housing 10 on which the pole column subassembly 30 is provided is 0 degrees to 5 degrees. In some embodiments, it is not excluded that the width of the single-piece tabs 221 is consistent with the width of the electrode piece.

It should be noted that the invention provides no limitation to the sequence of providing the housing 10 and the cell 20.

Optionally, the single-piece tab 221 is made of metal foil with excellent electrical and thermal conductivity, such as aluminum, copper, or nickel.

In an embodiment, the cell 20 is a stacked cell, and the cell 20 has a first electrode piece stacked onto each other, a second electrode piece electrically opposite to the first electrode piece, and a separator film arranged between the first electrode piece and the second electrode piece, so that multiple pairs of the first electrode piece and the second electrode piece are stacked to form a stacked cell.

In an embodiment, please refer to FIG. 1B, the battery manufacturing method includes:
Step S101: A housing 10 is provided, which includes two first surfaces 11 opposite to each other in a first direction, and the first surface 11 is provided with a pole column subassembly 30 thereon.

Step S103: A cell 20 is provided, which is arranged in the housing 10. The cell 20 includes a cell body 21 and a tab portion 22. The tab portion 22 includes two or more single-piece tabs 221 extending from the lateral side of the cell body 21. When the single-piece tabs 221 are flattened along the direction perpendicular to the lateral side of the cell body 21, the overlapping direction of the single-piece tabs 221 is the first direction.

Step S105: The tab portion 22 is connected to the pole column subassembly 30.

Step S107: A side of the tab portion 22 away from the cell body 21 is bent toward a side away from the pole column subassembly 30.

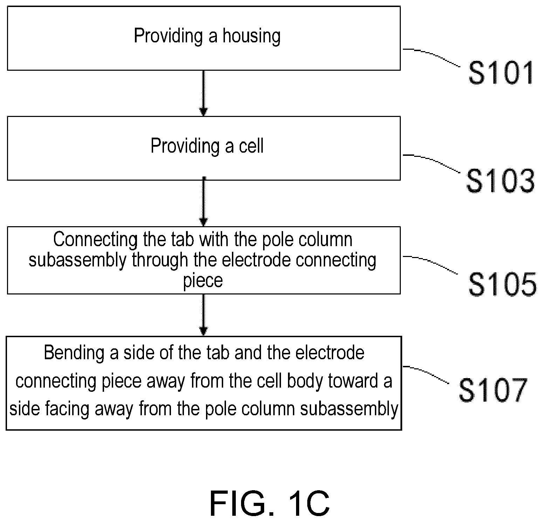

In an embodiment, please refer to FIG. 1C, the battery manufacturing method includes:

Step S101: A housing 10 is provided, which includes two first surfaces 11 opposite to each other in a first direction, and the first surface 11 is provided with a pole column subassembly 30 thereon.

Step S103: A cell 20 is provided, which is arranged in the housing 10. The cell 20 includes a cell body 21 and a tab portion 22. The tab portion 22 includes two or more single-piece tabs 221 extending from the lateral side of the cell body 21. When the single-piece tabs 221 are flattened along the direction perpendicular to the lateral side of the cell body 21, the overlapping direction of the single-piece tabs 221 is the first direction.

Step S105: The tab portion 22 is connected to the pole column subassembly 30 through the electrode connecting piece 40.

Step S 107: A side of the tab portion 22 and the electrode connecting piece 40 away from the cell body 21 is bent toward a side away from the pole column subassembly 30.

In an embodiment, after a plurality of single-piece tabs 221 are gathered together, the tab portion 22 close to the pole column subassembly 30 is formed, that is, relative to the center position of the lateral portion of the cell body 21, the tab portion 22 is deviated from the center position and deviated toward a side close to the pole column subassembly 30, which facilitates subsequent connection of the tab portion 22 and the pole column subassembly 30.

Further, in an embodiment, the pole column subassembly 30 protrudes from the surface of the housing 10 facing the cell body 21, and the single-piece tabs 221 are gathered together to form the tab portion 22. The tab portion 22 is close to the surface of the housing 10 where the pole column subassembly 30 is provided, that is, most of the single-piece tabs 221 are gathered along the direction close to the surface of the housing 10 where the pole column subassembly 30 is provided, and only a few single-piece tabs 221 are gathered along the direction away from the surface of the housing 10 where the pole column subassembly 30 is provided.

Optionally, in an embodiment, the surface of the pole column subassembly 30 facing the cell body 21 and the surface of the housing 10 facing the cell body 21 are substantially on the same plane. The tab portion 22 is formed after the single-piece tabs 221 are gathered together. The tab portion 22 is close to the surface of the housing 10 where the pole column subassembly 30 is provided. That is, all of the single-piece tabs 221 are gathered along the direction close to the surface of the housing 10 where the pole column subassembly 30 is provided.

Specifically, most of the single-piece tabs 221 are gathered in the direction close to the pole column subassembly 30 to form the tab portion 22, that is, after the cell body 21 is formed by stacking or winding, the plurality of single-piece tabs 221 are separated from each other. Therefore, the plurality of single-piece tabs 221 need to be gathered together. By gathering most of the single-piece tabs 221 together in the direction close to the pole column subassembly 30, the tab portion 22 is formed after the single-piece tabs 221 are gathered. The overall tab portion 22 is bent toward the surface of the housing 10 where the pole column subassembly 30 is provided, so that the tab portion 22 and the pole column subassembly 30 are close to each other to facilitate subsequent welding.

Optionally, the tab portion 22 and the pole column subassembly 30 are directly welded, that is, the tab portion 22 is directly welded to the pole column subassembly 30 without secondary processing after being gathered, so as to achieve an efficient connection effect. The welding of the tab portion 22 and the pole column subassembly 30 may adopt any one of laser welding, ultrasonic welding and resistance welding.

Further, after the tab portion 22 is directly welded to the pole column subassembly 30, a side of the tab portion 22 away from the cell body 21 is bent toward a side facing away from the pole column subassembly 30, so as to prevent the tab portion 22 from exceeding the portion with weld seam that is formed between the tab portion 22 and the pole column subassembly 30 and contacting other structures, thus avoiding causing risks to battery safety.

Optionally, the tab portion 22 and the pole column subassembly 30 are connected by an electrode connecting piece 40. The arrangement of the electrode connecting piece 40 can facilitate the selection of the welding position of the tab portion 22 and the pole column subassembly 30, and the welding selectivity will be more flexible, so the difficulty in welding can be further reduced. The welding of the tab portion 22 and the pole column subassembly 30 through the electrode connecting piece 40 may be performed by adopting any of laser welding, ultrasonic welding, and resistance welding.

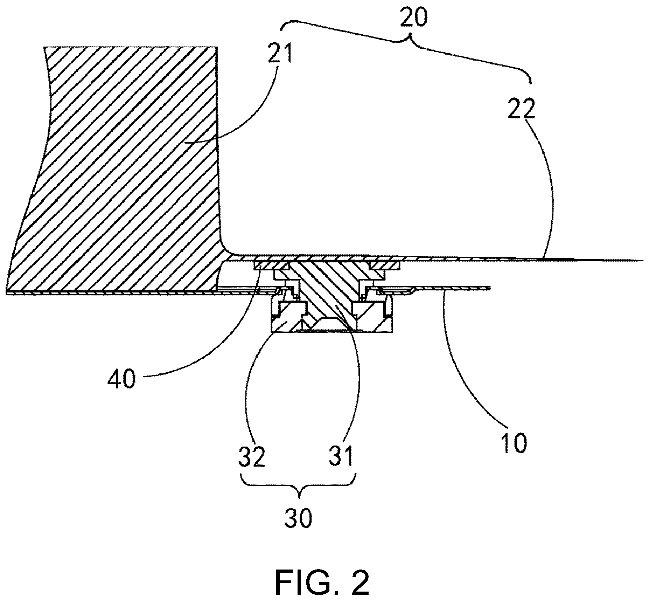

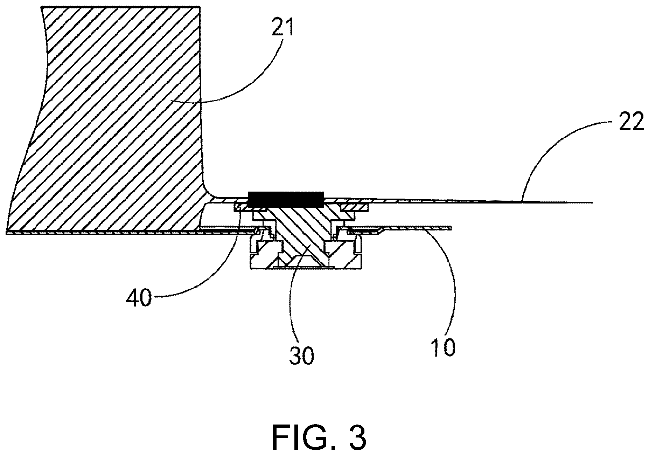

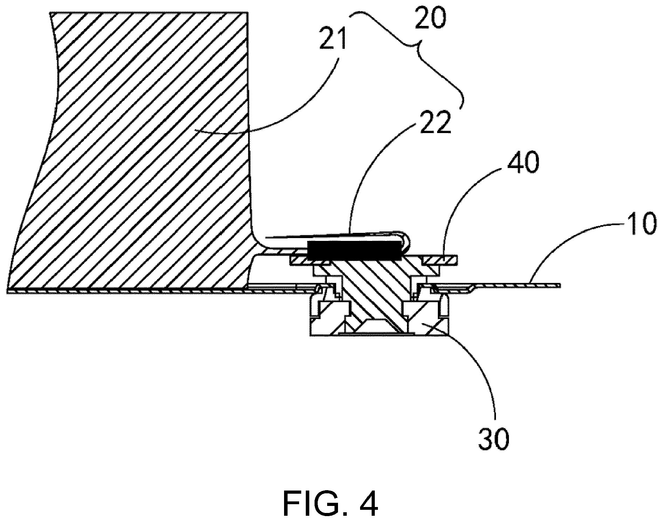

It should be noted that, as shown in FIG. 2, the electrode connecting piece 40 can be pre-placed on the pole column subassembly 30, that is, the pole column subassembly 30 passes through the electrode connecting piece 40, for example, welding or riveting is used to realize the connection between the pole column subassembly 30 and the electrode connecting piece 40. After each of the single-piece tabs 221 is gathered in a direction close to the pole column subassembly 30 to form the tab portion 22, the tab portion 22 can be in contact with the electrode connecting piece 40 and the pole column subassembly 30 simultaneously, and then welding is performed, as shown in FIG. 3. After the welding is completed, a side of the tab portion 22 far away from the cell body 21 is bent toward a side facing away from the pole column subassembly 30 to form a structure as shown in FIG. 4.

Optionally, the electrode connecting piece 40 may be pre-placed on the pole column subassembly 30, that is, one side of the electrode connecting piece 40 may be welded to one end of the pole column subassembly 30, and the other side of the electrode connecting piece 40 may be welded to the tab portion 22. The other end of the pole column subassembly 30 can be configured to connect with the bus bar, so as to group multiple batteries.

Further, after the tab portion 22 and the pole column subassembly 30 are connected through the electrode connecting piece 40, a side of the tab portion 22 and the electrode connecting piece 40 far away from the cell body 21 is bent toward a side facing away from the pole column subassembly 30, thereby preventing the longer part of the tab portion 22 and the electrode connecting piece 40 from being in contact with other structures to avoid causing risks to battery safety.

In some embodiments, when the tab portion 22 and the electrode connecting piece 40 are welded, and the tab portion 22 and the electrode connecting piece 40 are relatively long, under the circumstances, the welding seam between the tab portion 22 and the electrode connecting piece 40 may be located at one side of the pole column subassembly 30 away from the cell body 21, that is, the weld seam between the tab portion 22 and the electrode connecting piece 40 is relatively far from the weld seam between the pole column subassembly 30 and the electrode connecting piece 40. In this manner, when the tab portion 22 and the electrode connecting piece 40 are simultaneously bent, the weld seam between the tab portion 22 and the electrode connecting piece 40 can also be bent, that is, the weld seam between the tab portion 22 and the electrode connecting piece 40 can be bent at a side far away from the surface of the housing 10 where the pole column subassembly 30 is provided. In this embodiment, it is better not to bend the weld seam. Of course, the condition of bending the weld seam is not excluded.

Optionally, after the single-piece tabs 221 are gathered to form the tab portion 22, one end of the tab portion 22 away from the cell body 21 is located on the outside of the housing 10, that is, the tab portion 22 is longer. Under the circumstances, the weld seam between the tab portion 22 and the electrode connecting piece 40 may be located on the outside of the housing 10. In this manner, after the tab portion 22 and the electrode connecting piece 40 are bent, the weld seam is also bent accordingly. It should be noted that the housing 10 may include a cover plate (for example, the first housing member13) and a housing member13 (for example, the second housing member 14). The pole column subassembly 30 is arranged on the cover plate, and the cover plate may be a plate body, or the cover plate has a cavity with a smaller depth. Under the circumstances, the length of the tab portion 22 can be longer, so that after the single-piece tabs 22 are gathered to form the tab portion 22, one end of the tab portion 22 away from the cell body 21 is located outside of the cover plate. The housing member has a cavity with a greater depth relative to the cover plate, so that the cover plate and the housing member can close the cell 20. Of course, in some embodiments, it is not excluded that the pole column subassembly 30 is arranged on the housing member.

Optionally, in this embodiment, one end of the tab portion 22 away from the cell body 21 is located outside the housing 10, and one end of the electrode connecting piece 40 away from the cell body 21 is also located outside the housing 10. On the outside of the battery housing 10, the part of the tab portion 22 exceeding the housing 10 and the part of the electrode connecting piece 40 exceeding the housing 10 are welded. The tab portion 22 and the electrode connecting piece 40 are bent after the welding is completed. In this way, welding is performed on the outside of the housing 10, which is convenient for operation, and the metal residuals generated during the welding process will not fall into the housing, thus improving the safety of the battery.

In an embodiment, a plurality of single-piece tabs 221 are gathered and welded, and after welding, they are bent in a direction close to the pole column subassembly 30 to form the tab portion 22. After the multiple single-piece tabs 221 are gathered, relative to the center position of the lateral portion of the cell body 21, the multiple gathered single-piece tabs 221 deviate from the center position and deviate toward a side away from the pole column subassembly 30. Subsequently, the multiple single-piece tabs 221 are bent in a direction close to the pole column subassembly 30 so that the tab portion 22 is close to the pole column subassembly 30. Further, the single-piece tabs 221 are gathered and welded, and after welding, they are bent in a direction close to the pole column subassembly 30 to form the tab portion 22. The tab portion 22 is close to the surface of the housing 10 on which the pole column subassembly 30 is provided, that is, at least part of the single-piece tabs 221 are gathered along the direction away from the surface of the housing 10 where the pole column subassembly 30 is provided, so that the gathered single-piece tabs 221 are away from the surface of the housing 10 on which the pole column subassembly 30 is provided. Therefore, bending is required to make the tab portion 22 close to the pole column subassembly 30.

Specifically, at least part of the single-piece tabs 221 are gathered in a direction away from the pole column subassembly 30 and welded, and after welding, they are bent in a direction close to the pole column subassembly 30 to form a tab portion 22. At least part of the single-piece tabs 221 are first gathered in the direction away from the pole column subassembly 30, and then fixed by welding after being gathered. That is, since the gathered single-piece tabs 221 are far away from the pole column subassembly 30, it is convenient to perform pre-welding, and bending is performed after fixing, so that the tab portion 22 is close to the pole column subassembly 30 to facilitate subsequent welding.

Optionally, each of the single-piece tabs 221 can be gathered along the single-piece tabs 221 furthest from the pole column subassembly 30, so as to maximize the distance between the gathered single-piece tabs 221 and the pole column subassembly 30, which is convenient for performing pre-welding on the single-piece tabs 221 subsequently. In other words, there is sufficient space to place welding-related parts, such as welding heads or welding supports.

Optionally, each of the single-piece tabs 221 is gathered and welded along the direction close to the plane where the center line (that is, the center of the lateral portion of the cell body 21) slightly parallel to the lateral side of the cell body 21 is located. After welding, the single-piece tabs 221 are bent in the direction close to the pole column subassembly 30 to form a tab portion 22. The plane where the center line of the lateral side of the cell body 21 is located is perpendicular to the lateral side of the cell body 21. The multiple single-piece tabs 221 are first gathered toward the middle, and fixed by welding after being gathered, and then bent after fixing, so that the tab portion 22 is close to the pole column subassembly 30 to facilitate subsequent welding.

Optionally, each of the single-piece tabs 221 is welded before bending to form an ultrasonic welding mark, and the tab portion 22 is welded to the pole column subassembly 30 to form a laser welding mark. Specifically, the single-piece tabs 221 are metal foil sheets. The first welding realizes the connection of multiple single-piece tabs 221, the second welding forms the connection between the tab portion 22 and the pole column subassembly 30. The first welding adopts ultrasonic welding. The multiple metal foil sheets of the tab portion 22 are combined into a whole by ultrasonic action. It can be regarded that the multiple metal foil sheets are formed as a whole, and the ultrasonic welding area of the tab portion becomes a metal plate, which enhances the strength of the tab portion, so as to avoid damage to the tab portion. Correspondingly, the second welding adopts laser welding. The pole column subassembly 30 and the metal plate formed by the first welding are welded, and the metal plate formed by the first welding is fixedly connected to the pole column subassembly 30 through laser. The strength of the connection is enhanced, that is, the welding of the tab portion 22 and the pole column subassembly 30 is realized.

In an embodiment, the single-piece tabs 221 are gathered and welded to form a tab portion 22, and the tab portion 22 is away from the surface of the housing 10 on which the pole column subassembly 30 is provided. That is, after a plurality of single-piece tabs 221 are gathered, relative to the center position at the lateral portion of the cell body 21, the gathered tab portion 22 is deviated from the center position, and is deviated toward a side away from the surface of the housing 10 where the pole column subassembly 30 is provided. Moreover, the single-piece tabs 221 may not be bent after being gathered, and the connection of the single-piece tabs 221 with the pole column subassembly 30 is directly realized.

Optionally, each of the single-piece tabs 221 can be gathered along the single-piece tabs 221 furthest from the pole column subassembly 30, so as to maximize the distance between the gathered single-piece tabs 221 and the pole column subassembly 30, which is convenient for performing pre-welding on the single-piece tabs 221 subsequently.

Optionally, each of the single-piece tabs 221 is gathered and welded along the direction close to the plane where the center line slightly parallel to the lateral side of the cell body 21 is located to form a tab portion 22. That is, the single-piece tabs 221 may not be bent after being gathered, and the connection of the single-piece tabs 221 with the pole column subassembly 30 is directly realized.

In this embodiment, the height of the pole column subassembly 30 can be made higher to realize the connection with the pole column subassembly 30, or an electrode connecting piece 40 is provided between the pole column subassembly 30 and the tab portion 22 to realize the connection, the invention provides no limitation thereto.

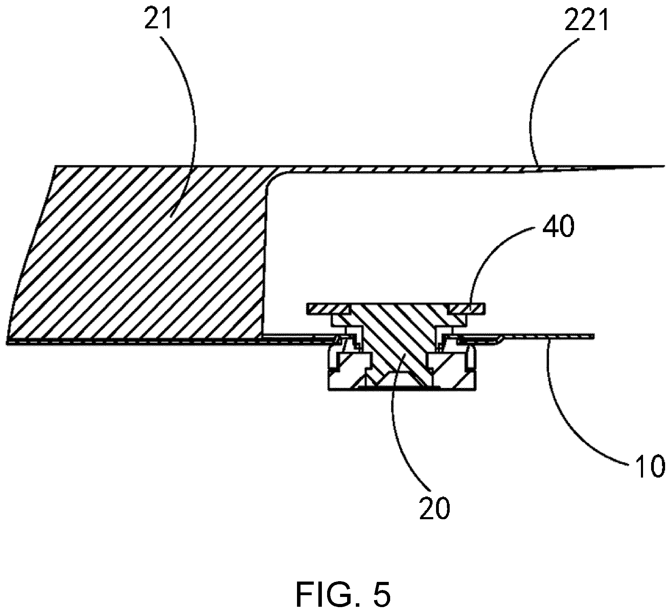

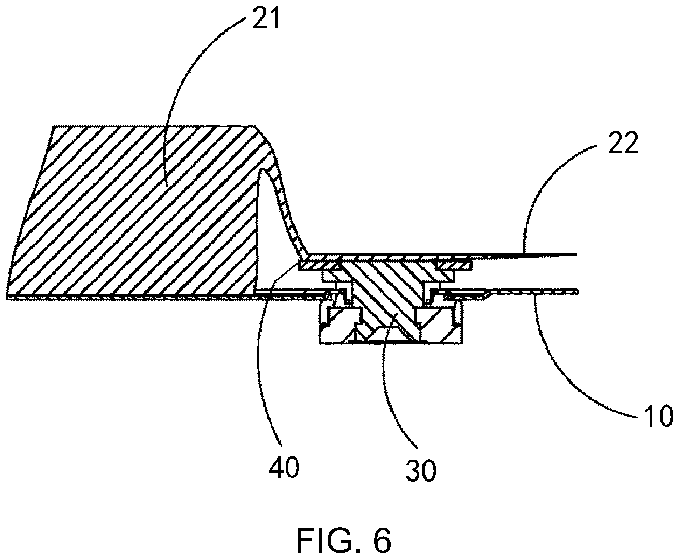

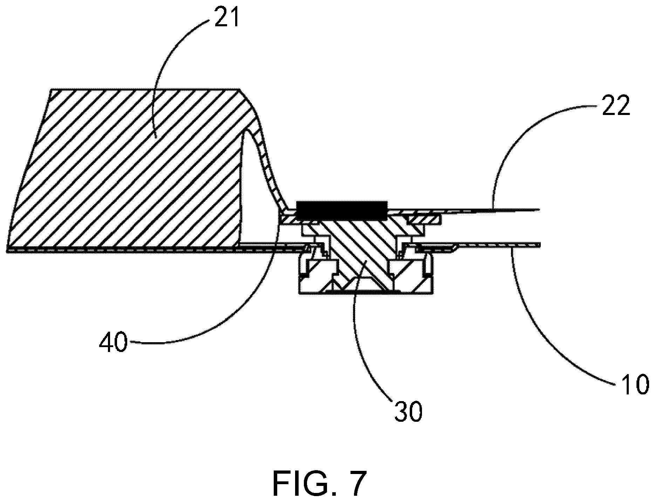

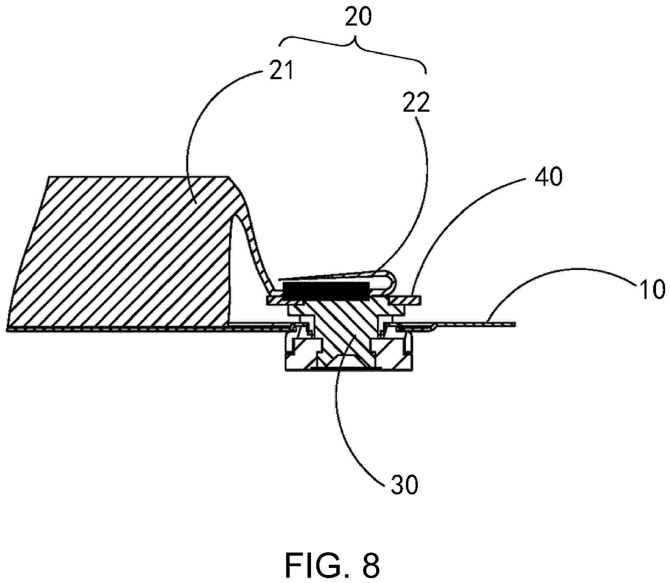

In an embodiment, as shown in FIG. 5, the electrode connecting piece 40 may be pre-placed on the pole column subassembly 30, that is, the pole column subassembly 30 passes through the electrode connecting piece 40, for example, by welding or riveting, etc. Multiple single-piece tabs 221 are gathered and welded in a direction away from the pole column subassembly 30, a plurality of single-piece tabs 221 are bent to form a tab portion 22, and the tab portion 22 can be in contact with the electrode connecting piece 40 and the pole column subassembly 30 simultaneously, as shown in FIG. 6. Then proceed to welding, as shown in FIG. 7. After the welding is completed, a side of the tab portion 22 away from the cell body 21 is bent toward a side facing away from the pole column subassembly 30 to form a structure as shown in FIG. 8.

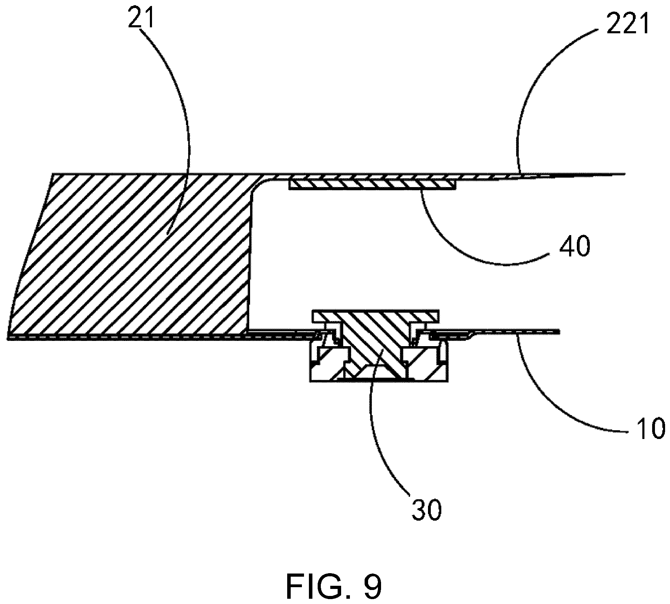

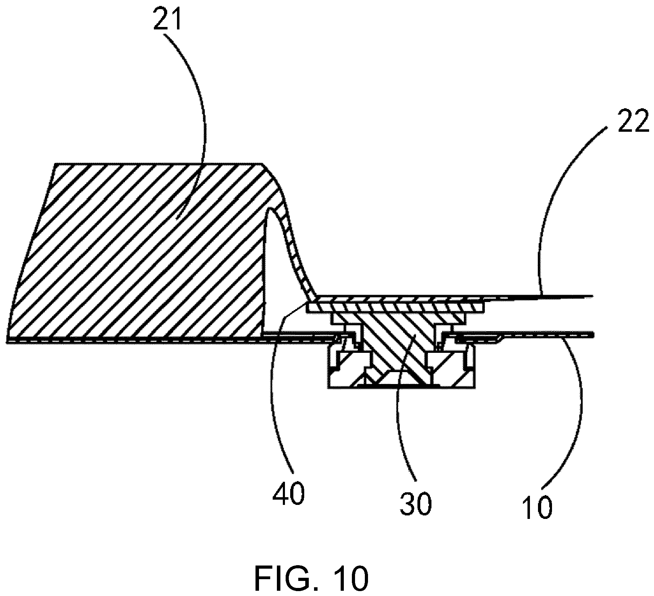

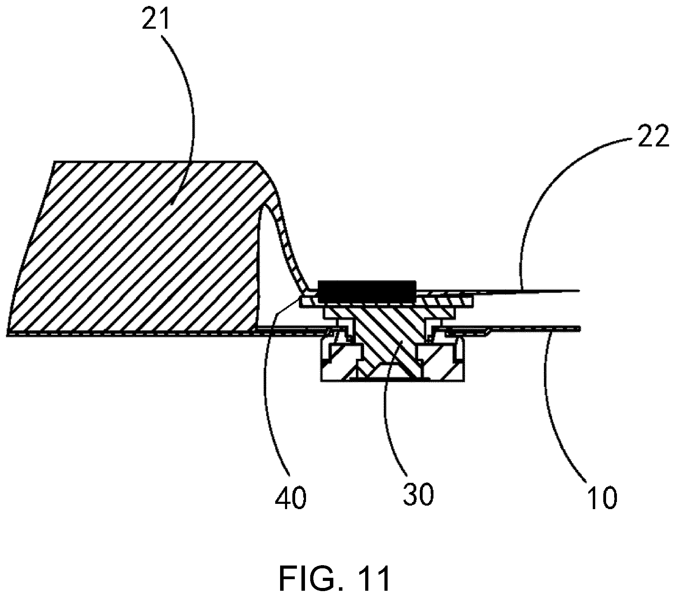

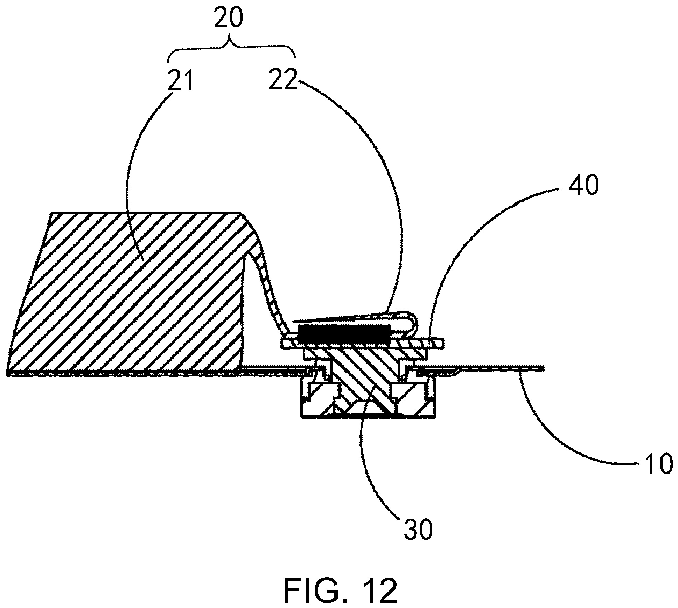

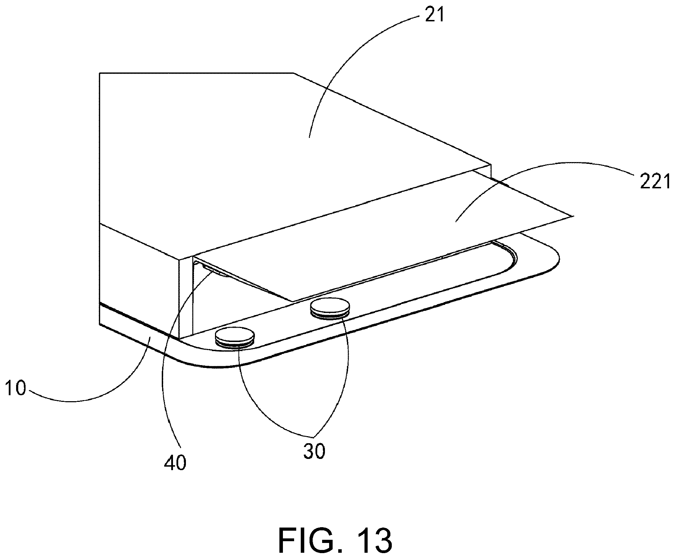

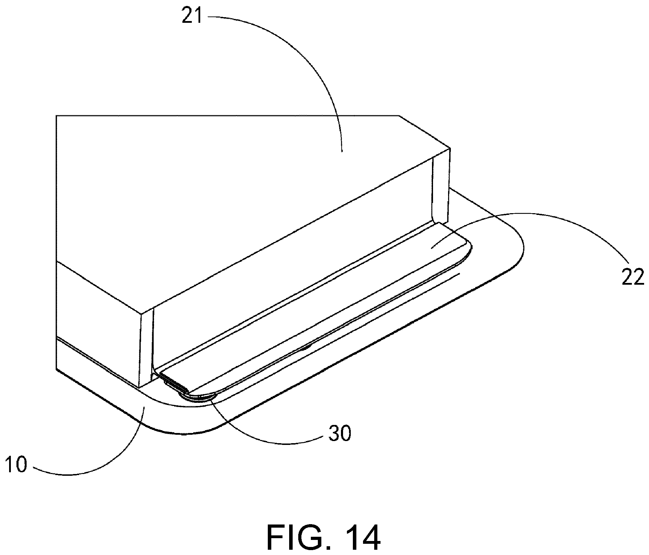

In an embodiment, as shown in FIG. 9 and FIG. 13, the electrode connecting piece 40 may be pre-placed on the gathered single-piece tabs 221. A plurality of single-piece tabs 221 are bent to form a tab portion 22, and the electrode connecting piece 40 on the tab portion 22 is in contact with the pole column subassembly 30, as shown in FIG. 10. Then proceed to welding, as shown in FIG. 11. After the welding is completed, a side of the tab portion 22 away from the cell body 21 is bent toward a side facing away from the pole column subassembly 30 to form the structure shown in FIG. 12 and FIG. 14.

Optionally, the electrode connecting piece 40 may be pre-placed on the pole column subassembly 30, that is, one side of the electrode connecting piece 40 is connected to the pole column subassembly 30. After the tab portion 22 is formed, the tab portion 22 is welded to the other side of the electrode connecting piece 40. It should be noted that the above-mentioned welding method can be selected from laser welding, resistance welding and ultrasonic welding.

An embodiment of the invention provides a battery, including: a housing 10, the housing 10 includes two first surfaces 11 opposite to each other in a first direction; a cell 20, the cell 20 is arranged in the housing 10, and the cell 20 includes a cell body 21 and a tab portion 22, and the tab portion 22 includes two or more single-piece tabs 221 extending from the lateral side of the cell body 21. When the single-piece tabs 221 are flattened in a direction perpendicular to the lateral side of the cell body 21, the overlapping direction of the single-piece tabs 221 is the first direction. A pole column subassembly 30 is further included, which is arranged on the first surface 11 and connected to the tab portion 22. The orthographic projections of the tab portion 22 and the pole column subassembly 30 along the first direction are at least partially overlapped on the first surface 11.

The battery in the embodiment of the invention includes a housing 10, a cell 20, and a pole column subassembly 30. The tab portion 22 includes two or more single-piece tabs 221 extending from the lateral side of the cell body 21. The orthographic projections of the tab portion 22 and the pole column subassembly 30 along the first direction are at least partially overlapped on the first surface 11, that is, the tab portion 22 and the pole column subassembly 30 are directly opposite to each other, thereby facilitating the welding of the pole column subassembly 30 and the tab portion 22, and the structure stability after welding is better.

When the single-piece tabs 221 are flattened in a direction perpendicular to the lateral side of the cell body 21, the large surface of the single-piece tabs 221 is slightly parallel to the surface of the housing 10 on which the pole column subassembly 30 is provided. That is, the single-piece tabs 221 are slightly parallel to the first surface 11.

In an embodiment, at least a part of the projection of the pole column subassembly 30 facing the plane where the tab portion 22 is located intersects with the tab portion 22. That is, a side of the pole column subassembly 30 facing the cell 20 in this embodiment is directly opposite to the tab portion 22. That is, when the single-piece tabs 221 are flattened in a direction perpendicular to the lateral side of the cell body 21, the large surface of the single-piece tabs 221 is slightly parallel to the bottom surface of the pole column subassembly 30. It can be further regarded as that the orthographic projections of the tab portion 22 and the pole column subassembly 30 along the first direction are at least partially overlapped on the first surface 11. In an embodiment, the single-piece tabs 221 are gathered to form the tab portion 22, and the tab portion 22 is close to the surface of the housing 10 where the pole column subassembly 30 is provided, that is, most of the single-piece tabs 221 are gathered in a direction close to the surface of the housing 10 where the pole column subassembly 30 is provided. Only a few single-piece tabs 221 are gathered along the direction away from the surface of the housing 10 where the pole column subassembly 30 is provided. After a plurality of single-piece tabs 221 are gathered, a tab portion 22 close to the pole column subassembly 30 is formed, that is, relative to the center position of the lateral portion of the cell body 21, the tab portion 22 is deviated from the center position and deviated to a side close to the pole column subassembly 30, so as to facilitate subsequent connection with the pole column subassembly 30.

In an embodiment, the tab portion 22 and the pole column subassembly 30 are directly welded, that is, after the tab portion 22 is gathered, it is directly welded to the pole column subassembly 30 without secondary processing, so as to achieve an efficient connection.

Optionally, a side of the tab portion 22 away from the cell body 21 is bent toward a side facing away from the pole column subassembly 30, so as to prevent the tab portion 22 from exceeding the portion with weld seam that is formed between the tab portion 22 and the pole column subassembly 30 and contacting other structures, thus avoiding causing risks to battery safety.

It should be noted that after each of the single-piece tabs 221 is gathered along the direction close to the pole column subassembly 30, the distance from each of the single-piece tabs 221 to the surface of the housing 10 where the pole column subassembly 30 is provided varies from one to another, a part of the formed tab portion 22 will be longer (a part of the segment of the tab portion 22 away from the cell body 21 becomes thin gradually). After the tab portion 22 and the pole column subassembly 30 are welded, a part of the tab portion 22 will exceed the weld seam, in order to prevent the connection of the tab portion 22 with other structures, the tab portion 22 needs to be bent upward, that is, bent in a direction close to the cell body 21 and away from the pole column subassembly 30, so as to form a winding structure.

In an embodiment, as shown in FIG. 2 to FIG. 12, the battery further includes: an electrode connecting piece 40. The electrode connecting piece 40 is welded to the tab portion 22, and the electrode connecting piece 40 is welded to the pole column subassembly 30, so that the tab portion 22 is connected to the tab portion 22 through the electrode connecting piece 40. The setting of the electrode connecting piece 40 can facilitate the selection of the welding position for the tab portion 22 and the pole column subassembly 30, and the selectivity of welding will be more flexible, so the difficulty of welding can be further reduced. In this embodiment, the weld seam formed between the electrode connecting piece 40 and the tab portion 22 at least partially do not overlap with the weld seam formed between the electrode connecting piece 40 and the pole column subassembly 30. In some embodiments, it is not excluded that the weld seam formed between the electrode connecting piece 40 and the tab portion 22 completely overlaps with the weld seam formed between the electrode connecting piece 40 and the pole column subassembly 30.

In an embodiment, a side of the tab portion 22 and the electrode connecting piece 40 away from the cell body 21 is bent toward a side facing away from the pole column subassembly 30, so as to prevent the longer part of the tab portion 22 and the electrode connecting piece 40 from contacting other structures and avoid causing risks to battery safety.

It should be noted that since the tab portion 22 and the electrode connecting piece 40 are welded, during the bending process of the tab portion 22 and the electrode connecting piece 40, the weld seam between the tab portion 22 and the electrode connecting piece 40 can also be bent, so as to further reduce the possibility of the tab portion 22 and the electrode connecting piece 40 coming into contact with other structures. Moreover, since the electrode connecting piece 40 is also bent, it can wrap and protect the tab portion 22 and improve the stability of the structure while reducing the risk of the tab portion 22 being torn off after bending.

Optionally, as shown in FIG. 2 to FIG. 4, the electrode connecting piece 40 is welded to the tab portion 22, and the electrode connecting piece 40 is connected to the pole column subassembly 30. That is, the electrode connecting piece 40 can be pre-connected to the pole column subassembly 30, and the tab portion 22 is subsequently welded with the electrode connecting piece 40. In other words, the electrode connecting piece 40 can be pre-welded to the pole column subassembly 30, or the electrode connecting piece 40 can be connected to the pole column subassembly 30 by riveting, etc., which is not limited by the invention. In this embodiment, the tab portion 22 can be welded to the electrode connecting piece 40 and the pole column subassembly 30 simultaneously, that is, an integral weld seam covers the electrode connecting piece 40 and the pole column subassembly 30 simultaneously. The pole column subassembly 30 may include a pole column 31 and a terminal 32, the pole column subassembly 30 may include at least two pole columns 31, the electrode connecting piece 40 may be connected to the at least two pole columns 31, and the terminal 32 is located outside the housing 10.

It should be noted that in the above embodiment, since the length of the tab portion 22 is relatively long, after being connected with the electrode connecting piece 40 or the pole column subassembly 30, they can be bent altogether. For the electrode connecting piece 40, a relatively short electrode connecting piece 40 may be selected, and the bending process may not be performed. Of course, in some embodiments, the electrode connecting piece 40 may be longer or may be bent accordingly, so as to wrap tab portion22. In some embodiments, when the tab portion 22 and the electrode connecting piece 40 are welded, and the tab portion 22 and the electrode connecting piece 40 are relatively long, under the circumstances, the weld seam between the tab portion 22 and the electrode connecting piece 40 may be located at a side of the pole column subassembly 30 away from the cell body 21. That is, the weld seam between the tab portion 22 and the electrode connecting piece 40 is relatively far from the weld seam between the pole column subassembly 30 and the electrode connecting piece 40. Therefore, when the tab portion 22 and the electrode connecting piece 40 are bent simultaneously, the weld seam between the tab portion 22 and the electrode connecting piece 40 can also be bent. That is, the weld seam between the tab portion 22 and the electrode connecting piece 40 can be bent at a side away from the surface of the housing 10 on which the pole column subassembly 30 is arranged. In this embodiment, it is better not to bend the weld seam. Of course, the condition of bending the weld seam is not excluded.

In an embodiment, the single-piece tabs 221 are gathered and welded. After welding, they are bent in a direction close to the pole column subassembly 30 to form a tab portion 22. The tab portion 22 is close to the surface of the housing 10 on which the pole column subassembly 30 is provided. That is, at least part of the single-piece tabs 221 are gathered along the direction away from the surface of the housing 10 on which the pole column subassembly 30 is provided, so that the gathered single-piece tabs 221 are away from the surface of the housing 10 on which the pole column subassembly 30 is provided. Therefore, bending is required to make the tab portion 22 close to the pole column subassembly 30. After multiple single-piece tabs 221 are gathered, relative to the center position at the lateral portion of the cell body 21, the multiple gathered single-piece tabs 221 deviate from the center position and deviate toward a side away from the pole column subassembly 30. Therefore, the single-piece tabs 221 are bent toward the pole column subassembly 30 subsequently, so that the tab portion 22 is close to the pole column subassembly 30. After being gathered, they are fixed through welding. In other words, since the gathered single-piece tabs 221 are far away from the pole column subassembly 30, it is convenient to perform pre-welding and perform bending after fixing, so that the tab portion 22 is close to the pole column subassembly 30 to facilitate subsequent welding.

Optionally, each of the single-piece tabs 221 can be gathered along the single-piece tabs 221 farthest from the pole column subassembly 30, so as to maximize the distance between the gathered single-piece tabs 221 and the pole column subassembly 30, which is convenient for performing pre-welding on the single-piece tabs 221 subsequently. That is, there is enough space to place welding-related parts, such as welding heads or welding supports.

Optionally, each of the single-piece tabs 221 is gathered and welded in a direction close to the plane where the center line slightly parallel to lateral side of the cell body 21 is located. After welding, the single-piece tabs 221 are bent in a direction close to the pole column subassembly 30 to form a tab portion 22. The plane where the center line at the lateral side of the cell body 21 is located is perpendicular to the lateral side of the cell body 21. The multiple single-piece tabs 221 are first gathered toward the middle, and fixed by welding after being gathered, and then bent after fixing, so that the tab portion 22 is close to the pole column subassembly 30 to facilitate subsequent welding.

It should be noted that since the multiple single-piece tabs 221 in this embodiment are gathered to the middle first, that is, the single-piece tabs 221 on the upper and lower sides are gathered toward the single-piece tabs 221 in the middle position. Under the circumstances, there is a certain distance between the gathered structure that is formed relative to the pole column subassembly 30, so as to facilitate the welding and fixing of the multiple single-piece tabs 221. After the welding is completed, the overall single-piece tabs 221 are bent to contact the pole column subassembly 30, and subsequent welding operation is completed.

In an embodiment, the single-piece tabs 221 are gathered and welded to form a tab portion 22, and the tab portion 22 is away from the surface of the housing 10 on which the pole column subassembly 30 is provided. That is, the multiple single-piece tabs 221 are gathered, relative to the center position at the lateral portion of the cell body 21, the gathered tab portion 22 deviates from the center position and deviates toward a side away from the surface of the housing 10 where the pole column subassembly 30 is provided. Furthermore, the single-piece tabs 221 may not be bent after being gathered, and the connection of single-piece tabs 221 and the pole column subassembly 30 is directly realized.

Optionally, each of the single-piece tabs 221 can be gathered along the single-piece tabs 221 farthest from the pole column subassembly 30, so as to maximize the distance between the gathered single-piece tabs 221 and the pole column subassembly 30, which is convenient for performing pre-welding on the single-piece tabs 221 subsequently.

Optionally, a plurality of single-piece tabs 221 are first gathered toward the middle and welded, and then bent, and the tab portion 22 formed under the circumstances can be directly welded to the pole column subassembly 30.

Alternatively, after the multiple single-piece tabs 221 are gathered and welded, the electrode connecting piece 40 can be welded to the gathered single-piece tabs 221 first, and then bent and welded to the pole column subassembly 30.

Alternatively, as shown in FIG. 5 to FIG. 8, after the multiple single-piece tabs 221 are gathered, the electrode connecting piece 40 is welded to the single-piece tabs 221 simultaneously and bent and welded to the pole column subassembly 30.

Or, as shown in FIG. 9 to FIG. 14, multiple single-piece tabs 221 are gathered and welded and then bent, and an electrode connecting piece 40 may be placed on the pole column subassembly 30 in advance. The electrode connecting piece 40 may be welded to the single-piece tabs 221 simultaneously when the multiple single-piece tabs 221 are welded, so that the tab portion 22 and the electrode connecting piece 40 are welded together. Under the circumstances, the tab portion 22 and the electrode connecting piece 40 are welded, and the tab portion 22 and the pole column subassembly 30 are welded.

Alternatively, a plurality of single-piece tabs 221 are gathered and welded and then bent, and an electrode connecting piece 40 may be placed on the pole column subassembly 30 in advance, so as to realize the welding of the tab portion 22 and the electrode connecting piece 40. Under the circumstances, the tab portion 22 is welded to one side of the electrode connecting piece 40, and the other side of the electrode connecting piece 40 is welded to the pole column subassembly 30.

Optionally, each of the single-piece tabs 221 is gathered and welded in a direction close to the plane where the center line slightly parallel to the lateral side of the cell body 21 is located to form a tab portion 22. That is, the single-piece tabs 221 may not be bent after being gathered and may be directly connected with the pole column subassembly 30. In this embodiment, the height of the pole column subassembly 30 can be made higher, so as to realize the connection of the single-piece tabs 221 with the pole column subassembly 30, or an electrode connecting piece 40 is provided between the pole column subassembly 30 and the tab portion 22 to realize the connection, the invention is not limited thereto.

In an embodiment, each of the single-piece tabs 221 is welded before bending to form an ultrasonic welding mark, and the tab portion 22 is welded to the pole column subassembly 30 to form a laser welding mark. Specifically, the single-piece tabs 221 are metal foil sheets. The first welding realizes the connection of multiple single-piece tabs 221, the second welding forms the connection between the tab portion 22 and the pole column subassembly 30. The first welding adopts ultrasonic welding. The multiple metal foil sheets of the tab portion 22 are combined into a whole by ultrasonic action. It can be regarded that the multiple metal foil sheets are formed as a whole and become a metal plate, which enhances the strength of the tab portion, so as to avoid damage to the tab portion. Correspondingly, the second welding adopts laser welding. The pole column subassembly 30 and the metal plate formed by the first welding are welded, and the metal plate formed by the first welding is fixedly connected to the pole column subassembly 30 through laser. The strength of the connection is enhanced, that is, the welding of the tab portion 22 and the pole column subassembly 30 is realized.

Optionally, the first welding can also be performed through laser welding or resistance welding. Correspondingly, the second welding can also be performed through ultrasonic welding or resistance welding.

It should be noted that in the above embodiment, although the tab portion 22 is gathered first and then bent, the length of the tab portion 22 is still relatively long. Therefore, after being connected to the electrode connecting piece 40 or the pole column subassembly 30, the tab portion 22 can still be bent. For the electrode connecting piece 40, a relatively short electrode connecting piece 40 may be selected, and the bending process may not be performed. Of course, in some embodiments, the electrode connecting piece 40 may be longer or may be bent accordingly, so as to wrap the tab portion 22. The detailed description of bending the tab portion 22 and the electrode connecting piece 40 will not be repeated here, and reference may be made to the above-mentioned embodiment.

Optionally, the housing 10 is approximately a rectangular structure, that is, while ignoring processing and manufacturing errors, the housing 10 may have a rectangular structure.

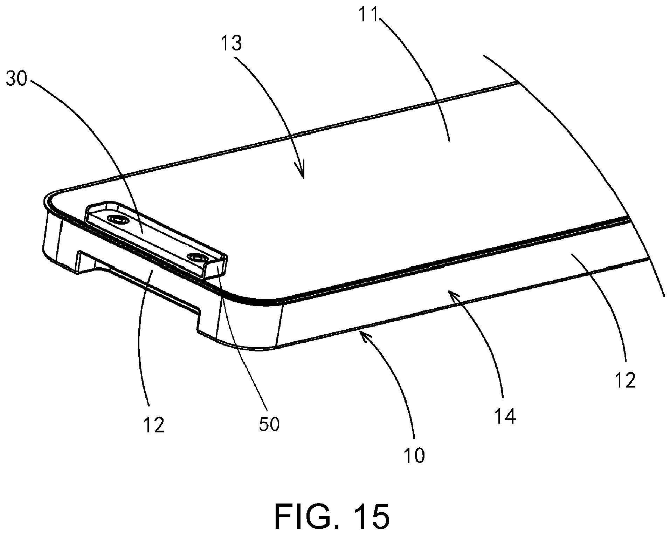

In an embodiment, as shown in FIG. 15, the housing 10 includes two opposite first surfaces 11 and four second surfaces 12 arranged around the first surface 11, that is, the housing 10 is approximately a rectangular structure. The area of the first surface 11 is greater than the area of the second surface 12; the pole column subassembly 30 is disposed on the first surface 11, so as to ensure that the pole column subassembly 30 has a reliable supporting surface, and the stability of the pole column subassembly 30 can be ensured.

It should be noted that the two opposite first surfaces 11 are the large surfaces of the housing 10, and the four second surfaces 12 are the small surfaces of the housing 10. The four second surfaces 12 include two pairs of small surfaces, namely the first pair of small surfaces extending in the length direction of the housing 10 and the second pair of small surfaces extending in the width direction of the housing 10. The area of the first pair of small surfaces is larger than the area of the second pair of small surfaces, but both are smaller than the area of the large surface. The housing 10 has a length direction and a width direction, and both the length direction and the width direction are linear directions. The length direction may be the longer extension direction of the housing 10, and the width direction may be the shorter extension direction of the housing 10.

In an embodiment, the material of the housing 10 may be stainless steel or aluminum, which has excellent corrosion resistance and sufficient strength. The thickness of the housing 10 is uniform, which not only has strong structural stability, but also facilitates processing.

In an embodiment, as shown in FIG. 15, the housing 10 includes: a first housing member 13; a second housing member 14, and the second housing member 14 is connected with the first housing member 13 to close the cell 20. The pole column subassembly 30 is provided on the first housing member 13 or the second housing member 14. The first housing member 13 and the second housing member 14 are arranged separately, which can facilitate the configuration of the cell 20 and the processing is also easy.

Optionally, the first housing member 13 and the second housing member 14 may both be formed with receiving cavities. After the first housing member 13 and the second housing member 14 are butted, the cell 20 is located in the cavity formed by the two receiving cavities. The depth of the receiving cavity belonging to the first housing member 13 and the second housing member 14 may be the same or different, which is not limited by the invention.

Optionally, the first housing member 13 is a flat plate, the second housing member 14 is formed with a receiving cavity, and the cell 20 is located in the receiving cavity. The arrangement of the flat plate can facilitate subsequent connections and is less difficult to process. The pole column subassembly 30 may be arranged on a flat plate, or the pole column subassembly 30 may be arranged on the second housing member 14 having the receiving cavity.

Further, the circumferential edge of the second housing member 14 is provided with a flange, and the first housing member 13 is welded to the flange, so as to ensure reliable welding of the first housing member 13 and the second housing member 14, and a stable connection can be provided. The arrangement of the flange is mainly to ensure that the welding area is increased, thereby improving the stability of welding.

Optionally, when the first housing member 13 has the receiving cavity, the circumferential edge of the first housing member 13 may also be provided with the flange, and the flange of the first housing member 13 and the flange of the second housing member 14 are welded together.

In some embodiments, there are two pole column subassemblies 30, and the two pole column subassemblies 30 are positive pole column subassemblies and negative pole column subassemblies, respectively. There are also two tab portions 22, and the two tab portions 22 are positive tab portion and negative tab portion, respectively. The positive pole column subassembly is connected to the positive tab portion, and the negative pole column subassembly is connected to the negative tab portion.

It should be noted that the pole column subassembly 30 and the housing 10 are insulated from each other. For example, an insulating member 50 can be used for insulation between the two, or an insulating coating can be used for insulation. The invention provides no limitation thereto. The insulating method may be selected according to actual needs.

In an embodiment, the cell 20 is a stacked cell, which is not only convenient for grouping the batteries, but the batteries can also be processed to obtain a longer battery.

Specifically, the cell 20 is a stacked cell, and the cell 20 has a first electrode piece stacked onto each other, a second electrode piece electrically opposite to the first electrode piece, and a separator film arranged between the first electrode piece and the second electrode piece, so that multiple pairs of the first electrode piece and the second electrode piece are stacked to form a stacked cell.

Optionally, the battery may be a wound battery, that is, the first electrode piece, the second electrode piece that is electrically opposite to the first electrode piece, and the separator film arranged between the first electrode piece and the second electrode piece are wound to obtain a wound cell.

In an embodiment, the length of the battery is a, 400mm≤a≤2500mm, the width of the battery is b, and the height of the battery is c, 2b≤a≤50b, and/or 0.5c≤b≤20c.

Further, 50mm≤b≤200mm, 10mm≤c≤100mm.

Preferably, 4b≤a≤25b, and/or, 2c≤b≤10c.

In the battery in the above embodiment, under the condition that sufficient energy density is ensured, the ratio of the battery length to the battery width is relatively large, and further, the ratio of the battery width to the battery height is relatively large.

In an embodiment, the length of the battery is a, and the width of the battery is b, 4b≤a≤7b, that is, the ratio of the length to the width of the battery in this embodiment is larger, thereby increasing the energy density of the battery and facilitating the battery module to be formed subsequently.

In an embodiment, the height of the battery is c, 3c≤b≤7c, and the ratio of the battery width to the battery height is relatively large, and the battery module can be easily formed under the condition that the sufficient energy density is ensured.

Optionally, the length of the battery can be 500mm to 1500mm, the width of the battery can be 80mm to 150mm, and the height of the battery can be 15mm to 25mm.

It should be noted that the length of the battery is the size in the length direction of the battery, the width of the battery is the size in the width direction of the battery, and the height of the battery is the size in the height direction of the battery, that is, the thickness of the battery.

It should be noted that, in an embodiment, the battery manufacturing method is adopted to form the above-mentioned battery. Other structures and related descriptions of the battery may be deduced from the above-mentioned embodiments, and no further description will be incorporated herein.

An embodiment of the invention further provides a battery module including the above-mentioned battery.

The battery of the battery module in an embodiment of the invention includes a housing 10, a cell 20, and a pole column subassembly 30. The tab portion 22 includes two or more single-piece tabs 221 extending from the lateral side of the cell body 21. The orthographic projections of the tab portion 22 and the pole column subassembly 30 along the first direction are at least partially overlapped on a first surface 11, that is, the tab portion 22 and the pole column subassembly 30 are directly opposite to each other, thereby facilitating the welding of the pole column subassembly 30 and the tab portion 22, and the structure stability after welding is better.

In some embodiments, the battery module includes at least two batteries. The at least two batteries are arranged side by side, and the first surfaces 11 of the two housings 10 are arranged opposite to each other, so as to be grouped to form a battery module.

An embodiment of the invention further provides a battery pack including the above-mentioned battery module.

A battery pack in an embodiment of the invention includes a battery module. The battery of the battery module includes a housing 10, a cell 20, and a pole column subassembly 30. The tab portion 22 includes two or more single-piece tabs 221 extending from the lateral side of the cell body 21. The orthographic projections of the tab portion 22 and the pole column subassembly 30 along the first direction are at least partially overlapped on a first surface 11, that is, the tab portion 22 and the pole column subassembly 30 are directly opposite to each other, thereby facilitating the welding of the pole column subassembly 30 and the tab portion 22, and the structure stability after welding is better.

Optionally, the battery pack includes at least two battery modules, and the battery pack may further include a box body, and the at least two battery modules are arranged in the box body.

An embodiment of the invention further provides a battery pack including the above-mentioned battery.

A battery of the battery pack in an embodiment of the invention includes a housing 10, a cell 20, and a pole column subassembly 30. The tab portion 22 includes two or more single-piece tabs 221 extending from the lateral side of the cell body 21. The orthographic projections of the tab portion 22 and the pole column subassembly 30 along the first direction are at least partially overlapped on a first surface 11, that is, the tab portion 22 and the pole column subassembly 30 are directly opposite to each other, thereby facilitating the welding of the pole column subassembly 30 and the tab portion 22, and the structure stability after welding is better.

Optionally, the battery pack includes at least two batteries, and the batteries may be directly arranged in the box body.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative, and the real scope and spirit of the present disclosure is defined by the appended claims.

It should be understood that the disclosure is not limited to the precise structures that have been described above and shown in the drawings, and various modifications and variations can be made without departing from the scope thereof. The scope of the disclosure is limited only by the appended claims.

## Claims

1. A battery, comprising:
a housing (10), which comprises two first surfaces (11) opposite to each other in a first direction;
a cell (20), which is arranged in the housing (10), wherein the cell (20) comprises a cell body (21) and a tab portion (22), the tab portion (22) comprises two or more single-piece tabs (221) extending from a lateral side of the cell body (21), when the single-piece tabs (221) are flattened along a direction perpendicular to the lateral side of the cell body (21), an overlapping direction of the single-piece tabs (221) is the first direction;
a pole column subassembly (30), which is arranged on the first surface (11) and connected with the tab portion (22);
wherein orthographic projections of the tab portion (22) and the pole column subassembly (30) along the first direction are at least partially overlapped on the first surface (11).

2. The battery according to claim 1, wherein the tab portion (22) is formed after the single-piece tabs (221) are gathered together, and the tab portion (22) is close to a surface of the housing (10) on which the pole column subassembly (30) is provided.

3. The battery according to claim 2, wherein the tab portion (22) is directly welded to the pole column subassembly (30); or,
the battery further comprising:
an electrode connecting piece (40), wherein the electrode connecting piece (40) is welded to the tab portion (22), and the electrode connecting piece (40) is connected to the pole column subassembly (30).

4. The battery according to claim 3, wherein a side of the tab portion (22) away from the cell body (21) is bent toward a side facing away from the pole column subassembly (30); or,
a side of the tab portion (22) and the electrode connecting piece (40) away from the cell body (21) is bent toward the side facing away from the pole column subassembly (30).

5. The battery according to claim 1, wherein the single-piece tabs (221) are gathered and welded, and after welding, the single-piece tabs (221) are bent in a direction close to the pole column subassembly (30) to form the tab portion (22), and the tab portion (22) is close to a surface of the housing (10) on which the pole column subassembly (30) is provided; or, the single-piece tabs (221) are gathered and welded to form the tab portion (22), and the tab portion (22) is far away from the surface of the housing (10) on which the pole column subassembly (30) is provided.

6. The battery according to claim 5, wherein the tab portion (22) is directly welded to the pole column subassembly (30); or,
the battery further comprises:
an electrode connecting piece (40), wherein the electrode connecting piece (40) is welded to the tab portion (22), and the electrode connecting piece (40) is connected to the pole column subassembly (30).

7. The battery according to claim 6, wherein a side of the tab portion (22) away from the cell body (21) is bent toward a side facing away from the pole column subassembly (30); or,
a side of the tab portion (22) and the electrode connecting piece (40) away from the cell body (21) is bent toward a side facing away from the pole column subassembly (30).

8. The battery according to claim 1, wherein the housing (10) further includes four second surfaces (12) arranged around the first surface (11), an area of the first surface (11) is greater than an area of the second surface (12).

9. The battery according to any one of claims 1-8, wherein the cell (20) is a stacked cell.

10. The battery according to any one of claims 1-8, wherein a length of the battery is a, a width of the battery is b, and a height of the battery is c, 2b≤a≤50b, and/or 0.5c≤b≤20c;
400mm≤a≤2500mm.

11. A battery module, wherein comprising the battery as claimed in any one of claims 1-10.

12. A battery pack, comprising the battery as claimed in any one of claims 1-10.

13. A battery manufacturing method, **characterized in that**, comprising:
providing a housing (10), which comprises two first surfaces (11) opposite to each other in a first direction, wherein the first surface (11) is provided with a pole column subassembly (30) thereon;
providing a cell (20), which is arranged in the housing (10), wherein the cell (20) comprises a cell body (21) and a tab portion (22), the tab portion (22) comprises two or more single-piece tabs (221) extending from a lateral side of the cell body (21), when the single-piece tabs (221) are flattened along a direction perpendicular to the lateral side of the cell body (21), an overlapping direction of the single-piece tabs (221) is the first direction;
connecting the tab portion (22) to the pole column subassembly (30);
wherein orthographic projections of the tab portion (22) and the pole column subassembly (30) along the first direction are at least partially overlapped on the first surface (11).

14. The battery manufacturing method according to claim 13, wherein the tab portion (22) is formed after the single-piece tabs (221) are gathered together, and the tab portion (22) is close to a surface of the housing (10) on which the pole column subassembly (30) is provided;
the tab portion (22) is directly welded to the pole column subassembly (30); or,
the tab portion (20) is connected to the pole column subassembly (30) through an electrode connecting piece (40).

15. The battery manufacturing method according to claim 13, wherein the single-piece tabs (221) are gathered and welded, and after welding, the single-piece tabs (221) are bent in a direction close to the pole column subassembly (30) to form the tab portion (22), and the tab portion (22) is close to a surface of the housing (10) on which the pole column subassembly (30) is provided; or, the single-piece tabs (22) are gathered and welded to form the tab portion (30), and the tab portion (30) is far away from the surface of the housing (10) on which the pole column subassembly (30) is provided;
the tab portion (22) and the pole column subassembly (30) are directly welded; or, the tab portion (22) and the pole column subassembly (30) are connected through an electrode connecting piece (40), and the electrode connecting piece (40) is weld on the tab portion (22) first, or the connecting piece (40) is pre-placed on the pole column subassembly (30).

16. The battery manufacturing method according to claim 15, further comprising:
after the tab portion (22) and the pole column subassembly (30) are connected through the electrode connecting piece (40),
a side of the tab portion (22) and the electrode connecting piece (40) away from the cell body (21) is bent toward a side facing away from the pole column subassembly (30).

17. The battery manufacturing method according to any one of claims 13-15, further comprising:
after the tab portion (22) and the pole column subassembly (30) arranged on the first surface (11) are connected,
a side of the tab portion (22) away from the cell body (21) is bent toward a side facing away from the pole column subassembly (30).
